Europäisches
Patentamt

European
Patent Office

Office européen
des brevets

(11) **EP 2 840 257 B1**

(12) **EUROPEAN PATENT SPECIFICATION**

(45) Date of publication and mention
of the grant of the patent:
**04.04.2018 Bulletin 2018/14**

(51) Int Cl.:
***F03D 7/02*** *(2006.01)*

(21) Application number: **13382336.9**

(22) Date of filing: **23.08.2013**

(54) **Method of determining a cut-in wind speed**

Verfahren zur Bestimmung einer Einschaltwindgeschwindigkeit

Procédé de détermination d'une vitesse de vent de mise en marche

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.02.2015 Bulletin 2015/09**

(73) Proprietor: **Alstom Renovables España, S.L.
08005 Barcelona (ES)**

(72) Inventor: **Pineda Amo, Isaac
08172 SANT CUGAT DEL VALLÈS (ES)**

(74) Representative: **ZBM Patents - Zea, Barlocci &
Markvardsen
Plaza Catalunya, 1
08002 Barcelona (ES)**

(56) References cited:
**WO-A1-02/068818        DE-A1- 19 844 258
DE-B3-102009 025 445    US-A1- 2011 133 457**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to methods of determining a cut-in wind speed for starting up a wind turbine.

BACKGROUND ART

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly or through the use of a gearbox. This way, the generator produces electricity which can be supplied to the electrical grid.

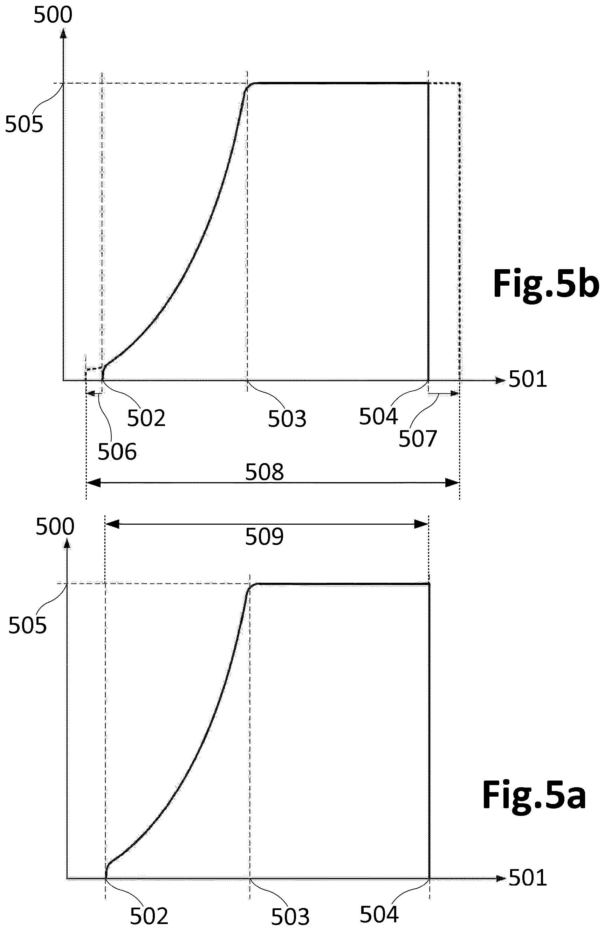

A wind turbine is normally operated by following a power curve which defines the electrical power output as a function of the wind speed. Figure 5a shows a standard power curve on a coordinate system having a horizontal axis 501 which refers to wind speed and a vertical axis 500 which refers to power output. This power curve shows how the power output 500 is zero to a minimum or cut-in wind speed 502. When this cut-in wind speed 502 is detected, an operation is initiated to cause the wind turbine to start up. Once started up, the wind turbine initiates generation of power 500 which grows (along with the wind speed) to a maximum or nominal power 505. The wind speed at which the nominal power 505 is reached is known as nominal wind speed 503.

Once the nominal wind speed 503 (and nominal power 505) has been achieved, the wind turbine is operated so as to keep the output power 500 (and rotor speed) substantially constant at the mentioned nominal power 505. Then, when a maximum wind speed 504 is detected, an operation is initiated to cause the wind turbine to reduce the rotor speed or even to stop. This maximum wind speed 504 is known as cut-out wind speed. This reduction of rotor speed or stop of the wind turbine permits avoiding risks of damage and/or fatigue on the wind turbine.

In most known methods of operating a wind turbine, the power curve to be followed and corresponding cut-in and cut-out wind speeds are predefined, typically by the manufacturer. Therefore, in most cases, power generation by a wind turbine is restricted to the behaviour of a single parameter, the wind speed, which must be within a static range, constituted by a pre-set cut-in wind speed and a pre-set cut-out wind speed, in order for the wind turbine to operate.

US2011133457A discloses a method for controlling an operation of a wind turbine. A meteorological condition is received from a meteorological sensor. An operating threshold value is calculated at least in part by applying a continuous function to the meteorological condition. An operation of the wind turbine is controlled based at least in part on the calculated operating threshold value. This method permits, for example, disabling the wind turbine if a current wind speed exceeds a maximum wind speed that is calculated based on an ambient air temperature or ambient air density.

DE 102009025445 shows another prior art example. The present invention aims at improving wind turbine operation.

SUMMARY OF THE INVENTION

In a first aspect, the present invention provides a method of determining a cut-in wind speed for starting up a wind turbine. This method comprises determining a characteristic indicative of the air density, and determining the cut-in wind speed depending on the determined air density characteristic, further comprising determining a characteristic indicative of the loads on the wind turbine accumulated over time; and determining a cut-out wind speed depending on the determined air density characteristic and on the characteristic indicative of the loads accumulated over time. An aspect of this method may be that it can provide a cut-in wind speed which is appropriate for the prevailing ambient conditions. For example, if the temperature is high at a wind turbine site, the density of the air will be relatively low. The cut-in wind speed will thus be higher in examples of the present invention. This avoids the wind turbine being started up when there is not enough energy in the air. Such a start-up costs energy and in certain conditions it may result that the wind turbine actually does not start its operation. If on the other hand, the air density is relatively high, a lower cut-in wind speed may be provided, such that power generation by the wind turbine may be started earlier. If this occurs, the wind turbine may generate power for longer periods of time.

A key point of the proposed method is that it provides a cut-in wind speed based on the determined air density characteristic, which may be obtained from e.g. temperature and/or pressure and/or humidity measurements. Denser air provides more energy to a wind turbine (to be transformed into electricity) than if the air is less dense. Taking this into account, the method may e.g. establish a lower cut-in wind speed when the air is determined to be denser. This lower cut-in wind speed may thus extend the time (and amount) of power generation by the wind turbine.

In some embodiments of the method, determining the cut-in wind speed depending on the determined air density characteristic may be based on processing a first table associating air density parameters with cut-in wind speed values. In particular, the method may comprise finding, in this first table, an air density parameter matching determined air density characteristic. Then, a cut-in wind speed value associated with the found air density parameter may be obtained from the first table. Then, the cut-in wind speed may be determined depending on the obtained cut-in wind speed value.

An aspect of basing the method on such a first associating table may be that a variable cut-in wind speed may be constantly flexibly updated. The behaviour of the method may be very easily changed by just changing the content of this table. This may permit monitoring the results of the method during normal operation of the wind turbine, e.g. for a specific site. If these results are considered not good enough, the table can be regenerated so as to improve the results of the method. This "amending" process can be easily repeated as often as necessary without necessity of disabling any involved element, such as e.g. any object (e.g. computer program) or device (e.g. control unit) implementing the method.

In this first associating table, each air density parameter may comprise at least one air density value, such that the air density parameter is considered to match the determined air density characteristic when the air density value is substantially equal to the determined air density characteristic.

Alternatively, an air density parameter may instead be a temperature and/or a pressure or a temperature range and/or a pressure range. In some circumstances, for a given site a relationship between local temperature and air density may be assumed constant. Since a temperature measurement is relatively easy, such a temperature measurement may give a direct and reliable indication of air density. On other sites, it may be necessary or preferable to measure other parameters such as ambient pressure and/or humidity of the air.

Further alternatively, each air density parameter may comprise an air density range, such that the air density parameter is considered to match the determined air density characteristic when the determined air density characteristic is within the air density range. An aspect of having ranges instead of air density values may be that all the possible air density situations may be easily covered by the table, such that a cut-in wind speed may be provided from the table in any case.

Herein, "air density parameter" may be interpreted as a parameter indicative of air density and may comprise concrete values or ranges.

In embodiments of the method, if no air density parameter has been found in the first table, the method may provide a default cut-in wind speed as the determined cut-in wind speed. An aspect of providing this default cut-in wind speed may be that an empty or incomplete first associating table may be used by the method. This may permit initiating operation of a recently installed wind turbine by having said table empty. Then, the behaviour of the wind turbine may be repeatedly monitored and analysed depending on e.g. the particular configuration of the wind turbine and/or prevailing ambient conditions of its location. Values resulting from this monitoring/analysis of the wind turbine operation may permit refilling the table with progressively improved values/ranges. This way, the default cut-in wind speed may progressively loose prominence.

The first associating table may have been calculated by simulating a plurality of wind turbine start-ups under different simulated air densities and cut-in wind speeds. Such simulations may be based at least partially on site-specific meteorological conditions including e.g. ambient pressure and humidity. The simulations may be performed by means of suitable software.

Alternatively or complementary, the first table may have been calculated by performing a plurality of start-ups on one or more existing wind turbines under different determined air densities (or temperatures) and cut-in wind speeds. As an alternative to simulations, existing and operating wind turbines can be monitored so as to keep track of different start-ups under different air conditions. An aspect of this option may be that more realistic data can be obtained for filing the table.

In some examples, the first associating table may be filled with data obtained from simulations and also with data obtained from monitoring existing wind turbines. Certain air conditions may not occur during operation of an existing wind turbine, and/or start-up of the wind turbine may not have been tried under certain air conditions. Therefore, no realistic data may have been obtained for all possible conditions (wind turbine model and configuration, ambient conditions), so as to obtain a complete associating table. These "gaps" of realistic data may be filled with data obtained from simulations.

In alternative embodiments with respect to those based on the first associating table, the cut-in wind speed may be determined depending on the inverse of the cubic root of the determined air density characteristic. This rule for determining the cut-in wind speed derives from the following formula:

$$E = \frac{1}{2} \cdot \rho \cdot V^3 \cdot S,$$

wherein $E$ refers to the energy in the air, $\rho$ refers to the density of the air, $V$ refers to the wind speed, and $S$ refers to the area of the rotor plane. Details about how this formula originates this proposed "cubic root rule" will be provided in other parts of the description.

An aspect of obtaining a value for the cut-in wind speed by performing the herein called "cubic root rule" may be that rather complex structures of data, such as e.g. the first associating table, may not be required (if air density can be reliably determined). This way, complex simulations and/or calculations (with data from real wind turbines) for filling said table may also be avoided. Another aspect may be that said table may contain incomplete data (i.e. gaps of data), as explained before, while the proposed "cubic root rule" will produce a cut-in value for any air density provided thereto.

Of course, somehow the air density needs to be determined. Air density may be described using the following formula (assuming dry air):

$$\rho = \frac{p}{R_{specific}T}$$

wherein $\rho$ is the air density, $p$ is absolute pressure, $R_{specific}$ is the specific gas constant for dry air, and $T$ is absolute temperature.

If humidity (the presence of water vapour in the air) is taken into account, air density may be determined using:

$$\rho_{humid\ air} = \frac{p_d M_d + p_v M_v}{RT}$$

wherein $\rho_{humid\ air}$ is the Density of the humid air (kg/m$^3$); $p_d$ is the Partial pressure of dry air (Pa); $T$ is the Temperature (K); $p_v$ is the Pressure of water vapour (Pa); $M_d$ is the Molar mass of dry air, 0.028964 (kg/mol); $M_v$ is the Molar mass of water vapour, 0.018016 (kg/mol); and R is the Universal gas constant, 8.314 J/(K·mol).

In the above formulas, and depending on the site, certain variables may be assumed to be constant, such as e.g. the humidity. In this case, measurements of the atmospheric pressure and the temperature give a reliable indication of the air density.

In other circumstances, e.g. other sites, the atmospheric pressure may also be assumed to be constant. A temperature measurement may thus be enough to be able to determine the local air density.

Further, a method may be provided of determining operational limits for a wind turbine. This method may comprise any of the disclosed embodiments of the method of determining a cut-in wind speed, along with a step of determining a cut-out wind speed also at least partially depending on the determined air density characteristic. An aspect of this method may be that longer periods of power generation by the wind turbine may be enabled by the method if favourable air conditions occur. On the other hand, operation may be limited if conditions are less favourable and e.g. high loads caused by high wind speeds and relatively dense air may be avoided.

For example, suppose a situation in which the turbine is stopped, the wind speed is low but increasing, and the density of the air is high. The method may produce a relatively low cut-in wind speed (because the air density is high), which may cause an earlier start up of the wind turbine. After a certain time of operation (i.e. power generation) the speed of the wind may increase but the density of the air may be low at this moment. Under these new conditions, the method may produce a relatively high cut-out wind speed (because the air density is low), which may cause a later stopping of the wind turbine.

On specific sites, the variation in air density can be very significant between summer and winter and even between day and night. For example, in desert sites, the temperature difference between day and night can reach up to 70°C. The air density thus varies significantly throughout a day as well.

In the above example, the particularly favourable air conditions, based on an "initially high" air density and a "finally low" air density, and their consideration by the method may cause a significantly extended period of power generation by the wind turbine. These extended periods of operation may provide valuable results in terms of further power generation.

In embodiments of the method of determining operational limits, determining the cut-out wind speed may be based on a second table associating air density parameters with cut-out wind speed values. This method may comprise finding, in this second table, an air density parameter matching the determined air density characteristic. After, a cut-out wind speed value associated with the found air density parameter may be obtained from said second table. Then, the cut-out wind speed may be determined based on the obtained cut-out wind speed value.

Some of the considerations made for the first associating table may also be applied to this second associating table. For example, the air density parameters of this second table may be air density values or air density ranges or combinations of them. The air density parameters may also be temperatures, atmospheric pressures or ranges of these. Also, this second table may be obtained by performing suitable simulations and/or monitoring existing wind turbines to obtain data to be included in the table. Optionally, this table may have gaps of data, in which case a default cut-out wind speed may be provided by the method if required. Etc.

In some embodiments, the first and second associating tables may be combined in a single common table.

This single table may comprise e.g. a first (input) column for air density parameters, a second (output) column for cut-in wind speeds, and a third (output) column for cut-out wind speeds. Any row of this common table may comprise a value or range of values in the first (input) column, a value in the second (output) column, and a value in the third (output) column. This way, a particular air density will determine a cut-in wind speed and a cut-out wind speed to be provided to a corresponding method of operating the wind turbine.

This method of determining operational limits may further comprise, in some embodiments, determining a characteristic indicative of the loads on the wind turbine accumulated over time. This way, the cut-out wind speed may be determined further depending on the characteristic indicative of the loads accumulated over time. This way, if the wind turbine has suffered no excessive loads so far, a higher cut-out wind speed could be determined and provided to a corresponding method of operating the wind turbine.

In this sense, the second associating table may be extended to include an additional parameter. Particularly, the second table may also associate air density parameters and cut-out wind speed values with load accumulation parameters. With this further association, determining the cut-out wind speed may further comprise finding, in the extended second table, a load accumulation parameter matching the characteristic indicative of the loads accumulated over time. This way, the obtained cut-out wind speed value may be further associated with the found load accumulation parameter.

This further (load accumulation) parameter may also be added to the single common table (which combines the first and second tables), such that embodiments of the method using the single table may also take into account said other parameter. These embodiments may thus provide cut-in and cut-out wind speeds from the extended single common table further depending on the loads accumulated by the wind turbine over time.

Still with respect to the method of determining operational loads, determining the characteristic indicative of the loads accumulated over time may comprise, in some embodiments, determining one or more loads on the wind turbine. These determined loads on the wind turbine may be stored in a historical register, such that an average value of loads accumulated over time may be obtained from the historical register. Then the characteristic indicative of the loads accumulated over time may be determined based on the obtained average value.

The determined loads on the wind turbine may be stored in the historical register under diverse criteria. For example, each value or set of values representing a determined load may be kept individually, and the characteristic indicative of the accumulated loads over time may be obtained each time (when required) from some or all the values representing loads stored in the historical register. Alternatively or in addition to this, values representing determined loads may be kept according to diverse granularities, i.e. they may be aggregated under different criteria. A global aggregation of loads suffered by the wind turbine along its life may also be considered. Then, determination of the characteristic indicative of the accumulated loads over time may take into account different time intervals depending on the granularity used to store the determined loads.

In some embodiments, the extended second table may have been calculated by simulating a plurality of wind turbine stops under different simulated air densities, cut-out wind speeds and load accumulations. In particular, these simulations of wind turbine stops may comprise, for each simulated air density, cut-out wind speed and load accumulation: calculating one or more loads on the wind turbine based on said simulated air density and cut-out wind speed, and verifying that the calculated loads are within acceptable limits depending on said simulated load accumulation.

Similarly to the first and second tables, the extended second table may be alternatively calculated from real data obtained by monitoring one or more existing wind turbines, or by combining data from simulations and data from real wind turbines.

BRIEF DESCRIPTION OF THE DRAWINGS

Particular embodiments of the present invention will be described in the following by way of non-limiting examples, with reference to the appended drawings, in which:

Figure 1 is a schematic representation of a wind turbine suitable for carrying out embodiments of the method provided by the invention;
Figure 2 is a flow chart illustrating an embodiment of the method provided by the invention;
Figure 3 is a flow chart representing an algorithm for performing a particular step of the method illustrated by Figure 2;
Figure 4 is a flow chart illustrating an alternative to the algorithm exemplified by Figure 3; and
Figures 5a - 5b schematically illustrate a prior art power curve and an extended power curve respectively.

DETAILED DESCRIPTION OF EMBODIMENTS OF THE INVENTION

In the following description, numerous specific details are set forth in order to provide a thorough understanding of examples of the present invention. It will be understood by one skilled in the art however, that examples of the present invention may be practiced without some or all of these specific details. In other instances, well known elements have not been described in detail in order not to unnecessarily obscure the description of the present invention.

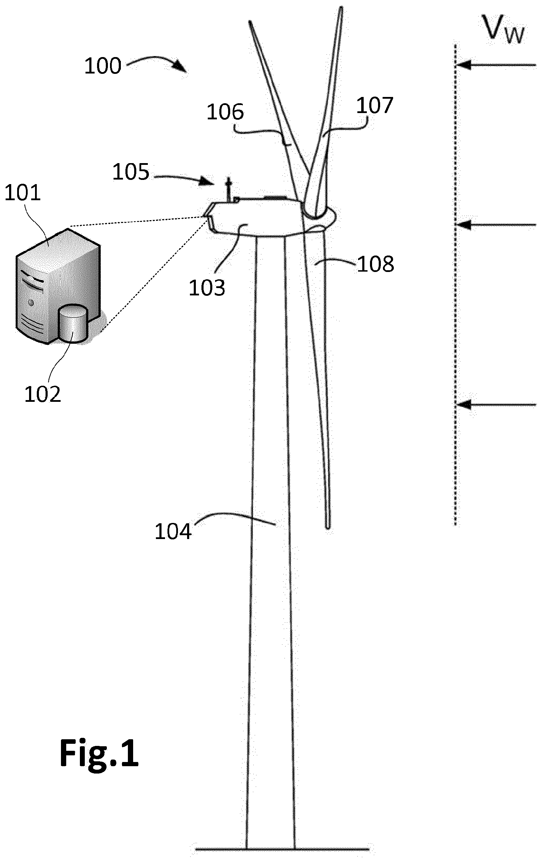

Figure 1 is a schematic representation of a wind turbine 100 suitable for carrying out various examples of methods in accordance with the invention. This wind turbine 100 is shown comprising a tower 104, a nacelle 103 and a rotor with a plurality of blades 106 - 108 arranged on the tower 104. The wind turbine 100 may further comprise a control unit 101 with a memory (e.g. a hard disk) 102 for storing data about operation (e.g. cut-in wind speeds) of the wind turbine 100. This control unit 101 (e.g. any kind of computer) may be programmed to perform one or more methods provided by the invention. Details about said methods will be provided in reference to other figures.

The control unit 101 and the memory 102 may be housed in a suitable location of the wind turbine, such as e.g. inside the nacelle 103 or the tower 104. Alternatively, the control unit 101 and the memory 102 may be arranged in a remote location and connected with the turbine through suitable connections, e.g. wireless technology or optical fibres. The control unit 101 acting as the control system for the wind turbine 100 may also form part of a SCADA of a wind park.

The wind turbine 100 may also comprise a system 105 for measuring the temperature outside the nacelle 103 and, optionally, other parameters suitable for determining the density of the air. For example, this system 105 may also comprise one or more devices to measure the air pressure and/or the humidity outside the nacelle 103. It is well known in the field of the invention that air density may be determined (or estimated) from temperature measurements and, optionally, air pressure and/or humidity measurements. See formulas indicated previously for calculating the air density and related comments.

The wind turbine 100 may further comprise one or more sensors (not shown) for measuring loads on the wind turbine. For example, the wind turbine 100 may comprise one or more load sensors in the root of some of the blades 106 - 108. In addition or alternatively, other types of load sensors may be used and located on other regions of the wind turbine, such as e.g. the tower 104, or the nacelle 103.

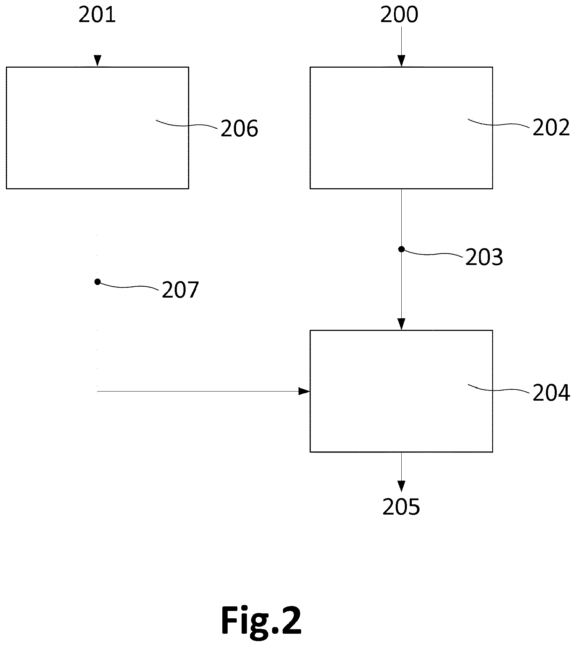

Figure 2 is a flow chart illustrating an embodiment of the method provided by the invention. This method may be performed by e.g. a wind turbine equal or similar to the wind turbine 100 of figure 1. This method is shown comprising three steps 202, 204, 206. At step 206, a first table 207 associating air density parameters with cut-in wind speed values is calculated. At step 202, an air density 203 is determined from e.g. temperature and humidity and/or pressure measurements. At step 204, the method determines the cut-in wind speed 205 from the determined air density characteristic 203 and the calculated first associating table 207.

The step 206 of calculating the first associating table 207 can be executed e.g. each time an improvement has been introduced in the corresponding algorithm or data to be processed. This step 206 may also be performed periodically, such as e.g. once every month, year, etc. Therefore, a suitable trigger 201 may cause execution of this step 206 under a desired frequency or simply when requested by a qualified user (e.g. an administrator of the first associating table 207).

On the other hand, the steps 202 and 204 (of determining air density and corresponding cut-in wind speed) may be seen as constituting an online processing unit which can be iteratively executed over time. Consequently, a suitable trigger 200 may cause the steps 202 and 204 to be executed under a frequency of e.g. once every 5 minutes, 30 minutes, 1 hour, etc., or this trigger 200 may be activated when some relevant situation(s) occur(s).

For instance, this trigger 200 may be an indication that the wind turbine is not operating, since determining the cut-in wind speed is important for start-up of the wind turbine. In another example, this trigger 200 may also be an indication that the wind turbine is operating but the wind speed is decreasing significantly, in which case determining the cut-in wind speed is important for deciding when to stop the wind turbine. Etc.

Since air density can change at any moment, the steps 202 and 204 may also be executed continuously. This way, a constantly updated cut-in wind speed may be provided to a corresponding method of operating the wind turbine.

The first associating table 207 may have the following structure or similar:

| air density parameter | cut-in wind speed |
| --- | --- |
| ... | ... |
| x1 | z1 |
| ... | ... |

In said structure, the air density parameters may be values or ranges of values in its corresponding column, and the cut-in wind speeds may be values in its corresponding column. The method may thus obtain e.g. the cut-in wind speed z1 when the air density (air density characteristic) is determined to be (within) x1. The air density parameter may be a value or a range of values of air densities. Alternatively, the air density parameter may be e.g. a temperature range and/or pressure range.

An alternative to the method of Figure 2 may be another one based on determining the cut-in wind speed based on the inverse of the cubic root of the determined air density characteristic. In this case, the step 206 may be avoided since no calculation of the table 207 is required, and the step 204 will not process said table 207. This alternative approach is founded on the fact that energy in the air of the rotor swept area may be expressed as follows:

$$E = \frac{1}{2} \cdot \rho \cdot V^3 \cdot S$$

wherein $E$ refers to the energy in the air, $\rho$ refers to the density of the air, $V$ refers to the wind speed, and $S$ refers to the area of the rotor plane.

From the previous expression, it can be derived that the wind speed $V$ for a given amount of energy may be expressed as follows:

$$V = \sqrt[3]{\frac{2 \cdot E}{S \cdot \rho}} = \sqrt[3]{\frac{(2 \cdot E)/S}{\rho}} = \frac{\sqrt[3]{(2 \cdot E)/S}}{\sqrt[3]{\rho}}$$

$E$ may be set to a particular value corresponding to a target (or desired) energy in the air, and $S$ may also be set to a particular value depending on the particular configuration of the wind turbine for which the cut-in wind speed is to be determined. Under these assumptions, $E$ and $S$ are constants, so the previous expression may be re-expressed as follows:

$$V = \frac{\sqrt[3]{(2 \cdot E)/S}}{\sqrt[3]{\rho}} = \frac{constant}{\sqrt[3]{\rho}} = constant \cdot \frac{1}{\sqrt[3]{\rho}}$$

Consequently, the wind speed $V$ from which the wind turbine can be started up (cut-in wind speed) may be determined based on the inverse of the cubic root of the determined air density characteristic.

Figure 2 may also be considered as reflecting an embodiment of the method of determining operational limits, which may comprise any of the herein described methods of determining a cut-in wind speed. This method of determining operational limits further comprises determining a cut-out wind speed also based on the determined air density characteristic. In this case, the step 206 may further comprise obtaining a second table associating air density parameters with cut-out wind speed values, which may be outputted along with the first associating table as a single output 207.

This second associating table 207 may have the following structure or similar:

| air density parameter | cut-out wind speed |
|---|---|
| ... | ... |
| x2 | z2 |
| ... | ... |

The method may thus obtain the cut-out wind speed z2 when the air density is determined to be (within) x2. If the air density parameter is a local temperature range, then the cut-out wind speed z2 is obtained if the local temperature falls within the temperature range x2.

In the embodiments based on the single common table 207, said table may have the following structure or similar:

| air density parameter | cut-in wind speed | cut-out wind speed |
|---|---|---|
| ... | ... | ... |
| x1 | z1 | z11 |

(continued)

| air density parameter | cut-in wind speed | cut-out wind speed |
|---|---|---|
| x2 | z22 | z2 |
| ... | ... | ... |

The method may thus obtain the cut-in wind speed z1 and cut-out wind speed z11 when the air density is determined to be (within) x1, and also the cut-in wind speed z22 and cut-out wind speed z2 when the air density is determined to be (within) x2.

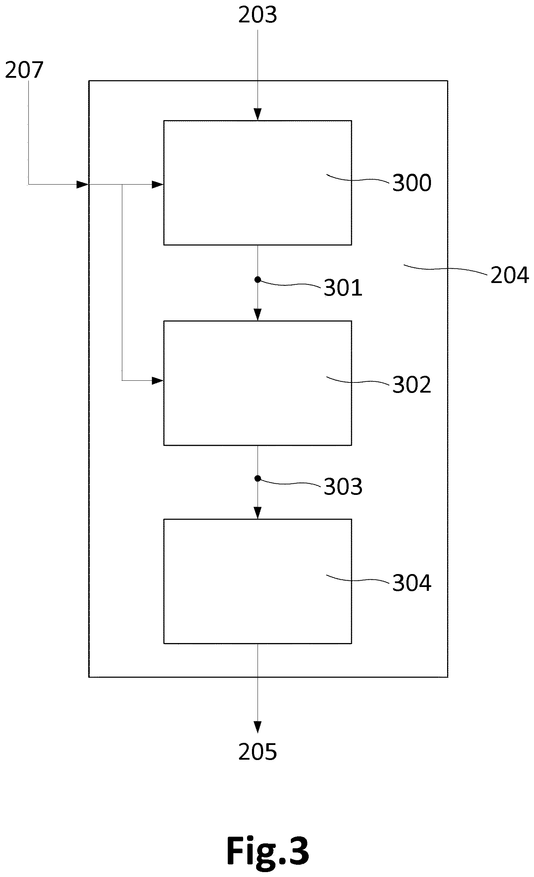

Figure 3 is a flow chart representing an algorithm for performing the step 204 of the method illustrated by Figure 2. Step 300 may comprise finding, in the first associating table 207, an air density parameter 301 matching the determined air density characteristic 203. Step 302 may comprise obtaining, from the first associating table 207, a cut-in wind speed value 303 associated with the found air density parameter 301. And step 304 may comprise determining the cut-in wind speed 205 depending on the obtained cut-in wind speed value 303.

In embodiments further based on the second associating table (to determine a cut-out wind speed), the steps 300 - 304 may comprise additional actions. Step 300 may further comprise finding, in the second associating table 207, a further air density parameter matching the determined air density characteristic 203. This further air density parameter may be outputted along with the air density parameter for determining the cut-in wind speed as a single output 301. Step 302 may comprise obtaining, from the second associating table 207, a cut-out wind speed value associated with the found further air density parameter. This obtained cut-out wind speed value may be outputted along with the obtained cut-in wind speed value a single output 303. And step 304 may comprise determining the cut-out wind speed depending on the obtained cut-out wind speed value. The determined cut-out wind speed can be outputted along with the determined cut-in wind speed as a single output 205 to be provided to a corresponding method of operating the wind turbine.

In embodiments based only on the single common associating table, the steps 300 - 304 may perform the following actions instead of those described before. Step 300 may comprise finding, in the single common associating table 207, an air density parameter 301 matching the determined air density characteristic 203. Step 302 may comprise obtaining, from the single common associating table 207, respective cut-in and cut-out wind speed values 303 associated with the found air density parameter 301. And step 304 may comprise determining the cut-in and cut-out wind speeds 205 depending on the cut-in and cut-out wind speed values 303 obtained from the single common associating table.

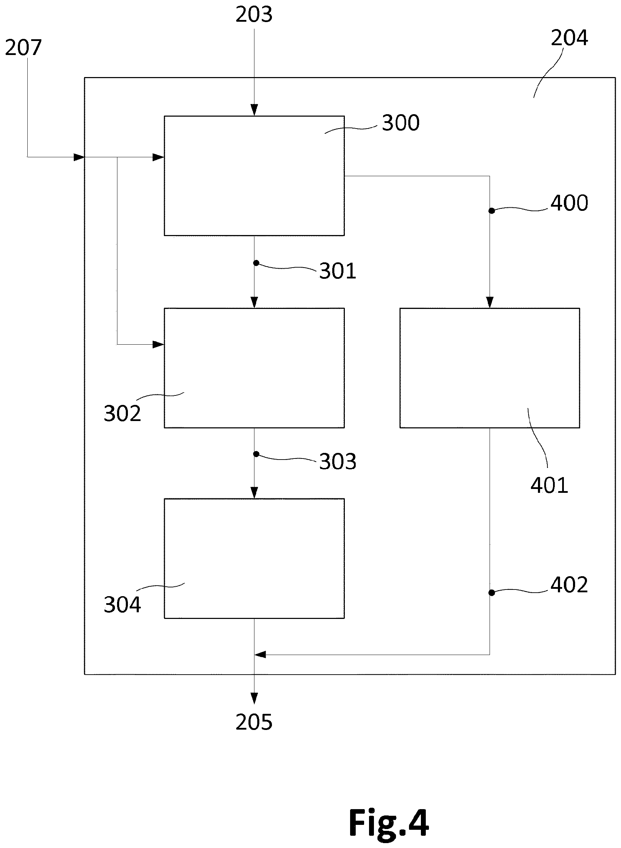

Figure 4 is a flow chart illustrating an alternative to the algorithm exemplified by Figure 3. The method of Figure 3 assumes that the participating table (first or second or single table) is a complete table, such that the step 300 of finding the air density parameter never fails. On the contrary, the method of Figure 4 considers that said finding in the step 300 may fail.

A difference between the examples of figures 3 and 4 is that Figure 4 shows a further step 401 and corresponding input/output 400/402 in comparison with Figure 3. Another difference is that if finding the air density parameter fails in step 300, a corresponding data 400 indicating said fail is generated. Then, if step 401 receives said data 400 indicating that the finding has failed, this step 401 generates a default cut-in and/or cut-out wind speed 402, which is outputted as the determined cut-in/cut-out wind speed 205.

In some embodiments of the method comprising determining a cut-out wind speed, the second associating table may be extended to have the following structure or similar:

| air density parameter | load accumulation parameter | cut-out wind speed |
|---|---|---|
| ... | ... | ... |
| x2 | y2 | z2 |
| ... | ... | ... |

These embodiments may comprise determining a characteristic indicative of the loads on the wind turbine accumulated over time, and finding, in the extended second table, a load accumulation parameter matching the characteristic indicative of the loads accumulated over time. This way, the obtained cut-out wind speed value may be further associated with the found load accumulation parameter. For example, considering the previous table, the method would generate the cut-out wind speed z2 when the determined air density characteristic is (within) x2 and the characteristic indicative of the loads accumulated over time is (within) y2.

Alternatively, the single common table could also be extended with such a load accumulation parameter, such that some of the embodiments based on said single common table could determine the cut-out wind speed further based on the loads accumulated over time. The general aim would be to provide higher cut-out wind speeds if the wind turbine has accumulated rather acceptable loads, and to provide lower cut-out wind speeds if the wind turbine has accumulated rather inacceptable loads.

The characteristic indicative of the loads accumulated over time may be determined by keeping track of load measurements from suitable sensors on the wind turbine. Examples of load sensors on the wind turbine have been described with reference to Figure 1. These load measurements may be used to determine loads on the wind turbine, which may then be stored in a historical register (e.g. database) of loads. An average of loads may thus be obtained from the loads stored in said register or database. Depending on the granularity of the data in this repository (i.e. register) of loads, the average of loads may be obtained by performing more or less time consuming calculations. For example, if loads are stored individually in the repository, the calculations will be much more time consuming than if loads are stored accumulated per day, week, month, etc.

This register or repository or database may be designed as a multidimensional database, which may permit having accumulated load data segmented in a very flexible and powerful manner, such that useful on-line and off-line analysis may be performed.

On-line analysis refers to an analysis performed during operation of the wind turbine, which may be aimed at providing data for determining the characteristic indicative of the accumulated loads. Off-line analysis refers to an analysis that may be performed at any time (during operation or not), which may be aimed at e.g. detecting anomalous situations. An exemplary off-line analysis may be based on evaluating accumulated loads (if available) for each region of the wind turbine where load measurements have been taken. An off-line analysis of this type may conclude e.g. that loads suffered by the wind turbine are globally acceptable but that most of said loads have been detected on a particular region, which may be inacceptable and possibly indicative of a problem. Then, this "problematic" region may be subjected to corresponding technical revision and/or maintenance to solve or at least attenuate the detected problem.

Figures 5a - 5b schematically illustrate a prior art power curve and an extended power curve respectively. Figure 5a has been explained in detail in the background section, and Figure 5b shows an extended curve obtained by embodiments of the method of determining operational limits. The extended power curve (of Figure 5b) comprises respective extended cut-in 506 and cut-out 507 wind speeds corresponding to "favourable" air conditions. When the air density is high, the cut-in wind speed may be extended to a lower value 506, such that the wind turbine may be started up earlier. And when the air density is low, the cut-out wind speed may be extended to a higher value 507, such that the wind turbine may be stopped later.

Figures 5a - 5b show that embodiments of the method of determining operational limits may determine an extended operational range 508 (of wind speeds) which may be significantly wider than a conventional operational range 509 (of wind speeds) resulting from or used by prior art methods. This possibly quite wider extended operational range 508 may cause significant further amounts of power generation.

**Claims**

1. A method of determining operational limits (205) for a wind turbine (100), comprising:

   determining a characteristic indicative of the air density (203);
   determining a cut-in wind speed (205) depending on the determined air density characteristic (203);
   **characterized by** further comprising:

   determining a characteristic indicative of the loads on the wind turbine (100) accumulated over time; and
   determining a cut-out wind speed (205) depending on the determined air density characteristic (203) and on the characteristic indicative of the loads accumulated over time.

2. The method according to claim 1, wherein determining the cut-in wind speed depending on the determined air density characteristic comprises:

   finding (300), in a first table (207) associating air density parameters with cut-in wind speed values, an air density parameter (301) matching the determined air density characteristic (203);
   obtaining (302), from the first table (207), a cut-in wind speed value (303) associated with the found air density parameter (301);
   determining (304) the cut-in wind speed (205) depending on the obtained cut-in wind speed value (303).

3. The method according to claim 2, wherein each air density parameter comprises at least one air density value, such that the air density parameter matches the determined air density characteristic (203) when the air density value is substantially equal to the determined air density characteristic (203).

4. The method according to claim 2, wherein each air density parameter comprises an air density range, such that the air density parameter matches the determined air density characteristic (203) when the determined air density characteristic (203) is within the air density range.

5. The method according to any of claims 2 to 4, wherein if no air density parameter has been found in the first table (207), a default cut-in wind speed is assumed as the determined cut-in wind speed.

6. The method according to any of claims 2 to 5, wherein the first table (207) has been calculated by simulating a plurality of wind turbine start-ups under different simulated air densities and cut-in wind speeds.

7. The method according to any of claims 2 to 5, wherein the first table (207) has been calculated by performing a plurality of start-ups on one or more existing wind turbines under different determined air densities and cut-in wind speeds.

8. The method according to claim 1, wherein determining the cut-in wind speed depending on the determined air density characteristic (203) comprises determining the cut-in wind speed based on the inverse of the cubic root of the determined air density characteristic (203).

9. The method according to any of claims 1 to 8, wherein determining the cut-out wind speed comprises:

   Finding (300), in a second table (207) associating air density parameters with cut-out wind speed values, an air density parameter (301) matching the determined air density characteristic (203);
   Obtaining (302), from the second table (207), a cut-out wind speed value (303) associated with the found air density parameter (301);
   Determining (304) the cut-out wind speed based on the obtained cut-out wind speed value (303).

10. The method according to claim 9, wherein the second table (207) also associates air density parameters and cut-out wind speed values with load accumulation parameters;
    wherein determining the cut-out wind speed further comprises finding, in the second table (207), a load accumulation parameter matching the characteristic indicative of the loads accumulated over time, such that the obtained cut-out wind speed value is further associated with the found load accumulation parameter.

11. The method according to claim 10, wherein determining the characteristic indicative of the loads accumulated over time comprises:

    determining one or more loads on the wind turbine (100);
    storing the determined loads on the wind turbine (100) in a historical register;
    obtaining, from the historical register, an average value of loads accumulated over time;
    determining the characteristic indicative of the loads accumulated over time based on the obtained average value.

12. The method according to any of claims 10 or 11, wherein the second table (207) has been calculated by simulating a plurality of wind turbine stops under different simulated air densities, cut-out wind speeds and load accumulations.

13. The method according to claim 12, wherein simulating the plurality of wind turbine stops comprises:

    for each simulated air density, cut-out wind speed and load accumulation:

       calculating one or more loads on the simulated wind turbine based on the simulated air density and cut-out wind speed;
       verifying that the calculated loads are within acceptable limits depending on the simulated load accumulation.

**Patentansprüche**

1. Ein Verfahren zum Feststellen von Betriebsgrenzwerten (205) für eine Windturbine (100), umfassend:

feststellen einer auf die Luftdichte hinweisende Eigenschaft (203);
feststellen einer Einschaltwindgeschwindigkeit (205) in Abhängigkeit von der festgestellten Luftdichteeigenschaft (203);
**dadurch gekennzeichnet, dass** es weiterhin folgendes umfasst:

feststellen einer auf die im Laufe der Zeit kumulierten Belastungen an der Windturbine (100) hinweisenden Eigenschaft; und
feststellen einer Abschaltwindgeschwindigkeit (205) in Abhängigkeit von der festgestellten Luftdichteeigenschaft (203) und von der auf die im Laufe der Zeit kumulierten Belastungen hinweisenden Eigenschaft.

2. Das Verfahren nach Anspruch 1, wobei das Feststellen der Einschaltwindgeschwindigkeit in Abhängigkeit von der festgestellten Luftdichteeigenschaft folgendes umfasst:

finden (300), in einer ersten Tabelle (207), in der Luftdichteparameter mit Einschaltwindgeschwindigkeitswerten verknüpft werden, von einem zu der festgestellten Luftdichteeigenschaft (203) passenden Luftdichteparameter (301);
erhalten (302), aus der ersten Tabelle (207), von einem mit dem gefundenen Luftdichteparameter (301) verknüpften Einschaltwindgeschwindigkeitswert (303);
feststellen (304) von der Einschaltwindgeschwindigkeit (205) in Abhängigkeit von dem erhaltenen Einschaltwindgeschwindigkeitswert (303).

3. Das Verfahren nach Anspruch 2, wobei jeder Luftdichteparameter mindestens einen Luftdichtewert umfasst, so dass der Luftdichteparameter zu der festgestellten Luftdichteeigenschaft (203) passt, wenn der Luftdichtewert im Wesentlichen der festgestellten Luftdichteeigenschaft (203) entspricht.

4. Das Verfahren nach Anspruch 2, wobei jeder Luftdichteparameter einen Luftdichtebereich umfasst, so dass der Luftdichteparameter zu der festgestellten Luftdichteeigenschaft (203) passt, wenn die festgestellte Luftdichteeigenschaft (203) im Luftdichtebereich liegt.

5. Das Verfahren nach einem der Ansprüche 2 bis 4, wobei, wenn kein Luftdichteparameter in der ersten Tabelle (207) gefunden worden ist, eine vorgegebene Einschaltwindgeschwindigkeit als die festgestellte Einschaltwindgeschwindigkeit angenommen wird.

6. Das Verfahren nach einem der Ansprüche 2 bis 5, wobei die erste Tabelle (207) durch die Simulation von einer Vielzahl von Windturbinenanläufen unter verschiedenen simulierten Luftdichten und Einschaltwindgeschwindigkeiten berechnet worden ist.

7. Das Verfahren nach einem der Ansprüche 2 bis 5, wobei die erste Tabelle (207) durch die Durchführung von einer Vielzahl von Anläufen an einer oder mehreren bestehenden Windturbinen unter verschiedenen festgestellten Luftdichten und Einschaltwindgeschwindigkeiten berechnet worden ist.

8. Das Verfahren nach Anspruch 1, wobei das Feststellen der Einschaltwindgeschwindigkeit in Abhängigkeit von der festgestellten Luftdichteeigenschaft (203) das Feststellen der Einschaltwindgeschwindigkeit beruhend auf der Umkehrfunktion der Kubikwurzel der festgestellten Luftdichteeigenschaft (203) umfasst.

9. Das Verfahren nach einem der Ansprüche 1 - 8, wobei das Feststellen der Abschaltwindgeschwindigkeit folgendes umfasst:

Finden (300), in einer zweiten Tabelle (207), in der Luftdichteparameter mit Abschaltwindgeschwindigkeitswerten verknüpft werden, von einem zu der festgestellten Luftdichteneigenschaft (203) passenden Luftdichteparameter (301);
Erhalten (302), aus der zweiten Tabelle (207), von einem mit dem gefundenen Luftdichteparameter (301) verknüpften Abschaltwindgeschwindigkeitswert (303);
Feststellen (304) der Abschaltwindgeschwindigkeit beruhend auf dem erhaltenen Abschaltwindgeschwindigkeitswert (303).

10. Das Verfahren nach Anspruch 9, wobei die zweite Tabelle (207) auch Luftdichteparameter und Abschaltwindgeschwindigkeitswerte mit Belastungskumulationsparametern verknüpft;

EP 2 840 257 B1

wobei das Feststellen der Abschaltwindgeschwindigkeit weiterhin das Finden, in der zweiten Tabelle (207), von einem Belastungskumulationsparameter umfasst, der zu der auf die im Laufe der Zeit kumulierten Belastungen hinweisenden Eigenschaft passt, so dass der erhaltene Abschaltwindgeschwindigkeitswert ferner mit dem gefundenen Belastungskumulationsparameter verknüpft ist.

**11.** Das Verfahren nach Anspruch 10, wobei das Feststellen der auf die im Laufe der Zeit kumulierten Belastungen hinweisenden Eigenschaft folgendes umfasst:

> feststellen von einer oder mehreren Belastungen an der Windturbine (100);
> speichern der festgestellten Belastungen an der Windturbine (100) in einem historischen Register;
> erhalten, aus dem historischen Register, von einem Durchschnittswert von im Laufe der Zeit kumulierten Belastungen;
> feststellen der auf die im Laufe der Zeit kumulierten Belastungen hinweisenden Eigenschaft beruhend auf dem erhaltenen Durchschnittswert.

**12.** Das Verfahren nach einem der Ansprüche 10 oder 11, wobei die zweite Tabelle (207) durch die Simulation von einer Vielzahl von Windturbinenhalten unter verschiedenen simulierten Luftdichten, Abschaltwindgeschwindigkeiten und Belastungskumulationen berechnet worden ist.

**13.** Das Verfahren nach Anspruch 12, wobei das Simulieren der Vielzahl von Windturbinenhalten folgendes umfasst:

> für jede simulierte Luftdichte, Abschaltwindgeschwindigkeit und Belastungskumulation:

>> berechnen von einer oder mehreren Belastungen an der simulierten Windturbine beruhend auf der simulierten Luftdichte und Abschaltwindgeschwindigkeit;
>> prüfen, dass die berechneten Belastungen innerhalb annehmbarer Grenzwerte in Abhängigkeit von der simulierten Belastungskumulation sind.

## Revendications

**1.** Un procédé de détermination de limites opérationnelles (205) pour une éolienne (100), comprenant :

> déterminer une caractéristique indicative de la densité de l'air (203) ;
> déterminer une vitesse de démarrage (205) en fonction de la caractéristique de la densité de l'air déterminée (203) ;
> **caractérisé en ce qu'**il comprend en outre :

>> déterminer une caractéristique indicative des charges agissant sur l'éolienne (100) accumulées au fil du temps ; et
>> déterminer une vitesse d'arrêt (205) en fonction de la caractéristique de la densité de l'air déterminée (203) et de la caractéristique indicative des charges accumulées au fil du temps.

**2.** Le procédé selon la revendication 1, dans lequel déterminer la vitesse de démarrage en fonction de la caractéristique de la densité de l'air déterminée comprend :

> trouver (300), dans une première table (207) liant des paramètres de densité de l'air à des valeurs de vitesse de démarrage, un paramètre de densité de l'air (301) correspondant à la caractéristique de la densité de l'air déterminée (203) ;
> obtenir (302), à partir de la première table (207), une valeur de vitesse de démarrage (303) liée au paramètre de densité de l'air trouvé (301) ;
> déterminer (304) la vitesse de démarrage (205) en fonction de la valeur de vitesse de démarrage obtenue (303).

**3.** Le procédé selon la revendication 2, dans lequel chaque paramètre de densité de l'air comprend au moins une valeur de densité de l'air, de façon que le paramètre de densité de l'air correspond à la caractéristique de densité de l'air déterminée (203) lorsque la valeur de densité de l'air est essentiellement égale à la caractéristique de densité de l'air déterminée (203).

**4.** Le procédé selon la revendication 2, dans lequel chaque paramètre de densité de l'air comprend un intervalle de densité de l'air, de façon que le paramètre de densité de l'air correspond à la caractéristique de densité de l'air déterminée (203) lorsque la caractéristique de densité de l'air déterminée (203) est dans l'intervalle de densité de l'air.

**5.** Le procédé selon l'une quelconque des revendications 2 à 4, dans lequel si aucun paramètre de densité de l'air n'a été trouvé dans la première table (207), une vitesse de démarrage par défaut est supposée comme la vitesse de démarrage déterminée.

**6.** Le procédé selon l'une quelconque des revendications 2 à 5, dans lequel la première table (207) a été calculée en simulant une pluralité de démarrages d'éolienne sous des densités de l'air et des vitesses de démarrage simulées différentes.

**7.** Le procédé selon l'une quelconque des revendications 2 à 5, dans lequel la première table (207) a été calculée en effectuant une pluralité de démarrages d'une ou plusieurs éoliennes existantes sous des densités de l'air et des vitesses de démarrage déterminées différentes.

**8.** Le procédé selon la revendication 1, dans lequel déterminer la vitesse de démarrage en fonction de la caractéristique de densité de l'air déterminée (203) comprend déterminer la vitesse de démarrage à partir de l'inverse de la racine cubique de la caractéristique de densité de l'air déterminée (203).

**9.** Le procédé selon l'une quelconque des revendications 1 - 8, dans lequel déterminer la vitesse d'arrêt comprend :

Trouver (300), dans une deuxième table (207) liant des paramètres de densité de l'air à des valeurs de vitesse d'arrêt, un paramètre de densité d l'air (301) correspondant à la caractéristique de densité de l'air déterminée (203) ;
Obtenir (302), à partir de la deuxième table (207), une valeur de vitesse d'arrêt (303) liée au paramètre de densité de l'air trouvé (301) ;
Déterminer (304) la vitesse d'arrêt à partir de la valeur de vitesse d'arrêt obtenue (303).

**10.** Le procédé selon la revendication 9, dans lequel la deuxième table (207) lie aussi des paramètres de densité de l'air et des valeurs de vitesse d'arrêt à des paramètres d'accumulation de charges ;
dans lequel déterminer la vitesse d'arrêt comprend en outre trouver, dans la deuxième table (207), un paramètre d'accumulation de charges correspondant à la caractéristique indicative des charges accumulées au fil du temps, de façon que la valeur de vitesse d'arrêt obtenue est liée en outre au paramètre d'accumulation de charges trouvé.

**11.** Le procédé selon la revendication 10, dans lequel déterminer la caractéristique indicative des charges accumulées au fil du temps comprend :

déterminer une ou plusieurs charges agissant sur l'éolienne (100) ;
stocker les charges agissant sur l'éolienne déterminées (100) dans un historique ;
obtenir, à partir de l'historique, une valeur moyenne de charges accumulées au fil du temps ;
déterminer la caractéristique indicative des charges accumulées au fil du temps à partir de la valeur moyenne obtenue.

**12.** Le procédé selon l'une quelconque des revendications 10 ou 11, dans lequel la deuxième table (207) a été calculée en simulant une pluralité d'arrêts d'éolienne sous des densités de l'air, des vitesses d'arrêt et des accumulations de charges simulées différentes.

**13.** Le procédé selon la revendication 12, dans lequel simuler la pluralité d'arrêts d'éolienne comprend :

pour chaque densité de l'air, vitesse d'arrêt et accumulation de charges simulées :

calculer une ou plusieurs charges agissant sur l'éolienne simulée à partir de la densité de l'air et de la vitesse d'arrêt simulées ;
vérifier que les charges calculées sont dans des limites acceptables en fonction de l'accumulation de charges simulée.

**Fig.1**

201                                  200

206                                  202

203

207

204

205

**Fig.2**

**Fig.3**

**Fig.4**

**Fig.5b**

**Fig.5a**

**EP 2 840 257 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011133457 A
- DE 102009025445